# EUROPÄISCHE PATENTANMELDUNG

(11) **EP 4 299 160 A1**
(43) Veröffentlichungstag der Anmeldung: **03.01.2024**
(21) Anmeldenummer: 23180852.8
(22) Anmeldetag: 22.06.2023
(51) Int. Cl.: B01D 53/04, B01D 53/30, G01K 3/14

(54) **SENSORENANORDNUNG UND VERFAHREN ZUR ÜBERWACHUNG EINES SORPTIONSMITTELS SOWIE SORPTIONSFILTER MIT INTEGRIERTER SENSORENANORDNUNG**

(30) Priorität: 01.07.2022 DE 102022116447
(71) Anmelder: Institut Für Luft- Und Kältetechnik gGmbh, 01309 Dresden (DE)
(72) Erfinder: Heidenreich, Ralf, 01309 Dresden (DE); Holfeld, Stefan, 01309 Dresden (DE); Lauer, Martin, 01309 Dresden (DE); Dr. Türke, Alexander, 01309 Dresden (DE)
(74) Vertreter: Werner, André

(57) **Zusammenfassung**

Die Erfindung betrifft eine Sensorenanordnung (10) zur Überwachung des Beladungszustandes eines unidirektional durchströmten Sorptionsmittels (2), ein Verfahren zur Sorptionsmittelüberwachung sowie einen Sorptionsfilter (1) mit einer solchen Sensorenanordnung (10). Mittels der Sensorenanordnung (10) kann der Beladungszustand des Sorptionsmittels (2) im Sorptionsfilter (1) ermittelt werden, um eine effiziente Filterausnutzung bei Vermeidung von Filterdurchbrüchen zu möglichen. Die Sensorenanordnung (10) umfasst mindestens zwei zur zeitaufgelösten Messwerterfassung eingerichtete Einzelsensoren (10.1, 10.2), wobei in Relation zum Sorptionsmittelformkörper (3) jeweils mindestens einer (10.1) der beiden Einzelsensoren (10.1, 10.2) einströmseitig und jeweils mindestens einer (10.2) der beiden Einzelsensoren (10.1, 10.2) abströmseitig positioniert sind, und wobei jeder der Einzelsensoren (10.1, 10.2) zumindest als Temperaturfühler zur zeitaufgelösten Erfassung von Temperaturmesswerten ausgebildet ist. Die Sensorenanordnung (10) bzw. der Sorptionsfilter (1) sind unter anderem in Klima- und Belüftungsanlagen zur Zuluft- und Umluftreinigung einsetzbar.

## Beschreibung

Die Erfindung betrifft eine Sensorenanordnung zur Überwachung des Beladungszustandes eines unidirektional durchströmten Sorptionsmittels, ein Verfahren zur Sorptionsmittelüberwachung sowie einen Sorptionsfilter mit einer solchen Sensorenanordnung. Die Sensorenanordnung bzw. der Sorptionsfilter sind unter anderem in Klima- und Belüftungsanlagen zur Zuluft- und Umluftreinigung einsetzbar.

Sorptionsfilter werden in einer Reihe von Anwendungen zur Luftreinhaltung bzw. Schadstofffilterung genutzt, um schädliche oder unerwünschte fluide Stoffe aus einem Rohgas abzuscheiden und so ein Reingas zu erzeugen. In vielen Fällen handelt es sich bei dem im Sorptionsfilter enthaltenen Sorptionsmittel um Aktivkohle, weshalb Sorptionsfilter häufig auch als Aktivkohlefilter bezeichnet werden. Apparativ kann ein Sorptionsfilter beispielsweise als eine unidirektional durchströmte Kartusche aufgebaut sein, die mit dem Sorptionsmittel gefüllt ist. Zur Schadstofffilterung strömt das Rohgas über einen Filtereingang in die Filterkartusche ein und über einen gegenüberliegenden Filterausgang als Reingas ab.

Die physikalische Wirkung dieser Sorptionsfilter beruht auf einer großen inneren Oberfläche des Sorptionsmittels. Bei Beaufschlagung des unbeladenen Sorptionsmittels, auch Sorbent bezeichnet, mit dem Rohgas, welches den zu filternden bzw. zu sorbierenden Stoff - das Sorptiv - enthält, wird das Sorptiv an der Oberfläche des Sorbents angelagert bzw. adsorbiert bis das Sorptionsmittel beladen ist. Die Beladung des Sorptionsmittels bezeichnet die Menge an Sorptiv (also zum Beispiel an Schadstoffen), bei der sich ein Gleichgewicht zwischen Anlagerung und Abgabe des zu sorbierenden Stoffes, d. h. eine Sättigung, einstellt. Nach der Anlagerung wird der adsorbierte Stoff auch Adsorpt genannt; das System aus sorbiertem Stoff und Sorptionsmittel, d. h. das beladene Sorptionsmittel, wird als Sorbat bezeichnet. Der Begriff Sorptionsmittel steht im vorliegenden Kontext übergreifend für den unbeladenen Zustand (Sorbent) und den beladenen Zustand (Sorbat).

Bei unidirektional durchströmten Sorptionsfiltern, wie zum Beispiel bei den oben beschriebenen Kartuschenfiltern, oder in einer unidirektional durchströmten Schüttung des Sorptionsmittels schreitet die Beladung des Sorptionsmittels in der Strömungsrichtung der Durchströmung des Sorptionsmittels voran. Die Grenzregion zwischen beladenem und unbeladenem Sorptionsmittel, in der die Adsorption aktiv stattfindet, wird als Adsorptionszone bezeichnet. Hinter bzw. stromaufwärts der Adsorptionszone ist das Sorptionsmittel vollständig beladen. Bei Betrieb sind zu einem bestimmten Zeitpunkt innerhalb eines Sorptionsfilters entlang der Strömungsrichtung also ein Bereich mit beladenem Sorptionsmittel, die Adsorptionszone sowie ein Bereich mit unbeladenem Sorptionsmittel ausgebildet. Die Grenzfläche der Adsorptionszone zum noch unbeladenen Sorptionsmittel wird vorliegend als Adsorptionsfront bezeichnet.

Wenn das gesamte im Sorptionsfilter enthaltene Sorptionsmittel beladen ist, d. h., wenn zum Beispiel die Adsorptionszone den filterausgangsseitigen Endbereich des Sorptionsmittels erreicht hat, verliert der Sorptionsfilter seine Wirkung. Der Filter ist dann verbraucht. Die zu filternden - unerwünschten oder schädlichen - Stoffe können nun zusammen mit dem Reingas aus dem Sorptionsfilter austreten. Diesen als Durchbruch des Sorptionsmittels bzw. Filterdurchbruch bezeichneten Zustand gilt es zu vermeiden.

Charakterisiert werden kann die Beladung des Sorptionsfilters bzw. des gesamten Sorptionsmittels im Sorptionsfilter durch dessen Beladungszustand, der im Kontext der vorliegenden Offenbarung als der Fortschritt bis zum Erreichen des Filterdurchbruchs definiert sein soll.

Die Beladung des im Sorptionsfilter enthaltenen Sorptionsmittels hängt von vielen Faktoren ab, nämlich zum Beispiel von der Art des zu filternden Schadstoffs bzw. der Rohgas-Zusammensetzung, der Temperatur, der Luftfeuchte oder vom verwendeten Sorptionsmittel. Aufgrund dieser komplexen Abhängigkeit ist eine betriebszeit- oder massezunahmebasierte Beladungs- bzw. Verbrauchsprognose häufig unzureichend, um einen Filtertausch nach größtmöglicher Nutzungsdauer, d. h. rechtzeitig, kurz vor dem Durchbruch, vornehmen zu können. Bei ebenfalls möglicher Detektion des Filterdurchbruchs mit filterausgangsseitig installierten Gassensoren müssen eine temporäre Schadstoffbelastung und ein unplanbarer Filtertausch hingenommen werden.

DE 10 2007 056 426 A1 offenbart eine Dunstabzugshaube mit einer Sorptionseinheit, die eine Erkennungsvorrichtung zum Erkennen des Beladungszustandes des Sorptionsmittels aufweist, wobei die Erkennungsvorrichtung ihrerseits eine Erfassungseinheit mit mindestens einer Temperaturmessstelle aufweist, die innerhalb des Sorptionsmittels in der Sorptionseinheit angeordnet ist und die Temperatur in zumindest einem Bereich des Sorptionsmittels in der Sorptionseinheit erfasst.

EP 1 316 331 A1 beschreibt ein Verfahren zur Bestimmung der Absorptionskapazität eines Systems zur Filterung von Kohlendioxid und eine zugehörige Vorrichtung, die eine Vielzahl von Temperatursensoren aufweist, die in oder neben dem Reagenzmaterial angeordnet sind, um den Temperaturunterschied zwischen mindestens zwei Stellen während der Kohlendioxidentfernung durch den Filter zu messen. Es ist ein Prozessormittel vorgesehen, um die verbleibende Kohlendioxid-Absorptionskapazität des verbleibenden aktiven Reagenzmaterials entsprechend der von den Sensoren gemessenen Temperaturdifferenz zu bestimmen.

US 5 511 409 A offenbart ein System und ein Verfahren zur Überwachung des Gehalts an flüchtigen organischen Verbindungen oder anderen dampfförmigen Schadstoffen in einem Gasstrom mittels eines Sorptionsmittels, wobei unter anderem Thermoelemente zur Überwachung der Beladung des Sorptionsmittels eingesetzt werden.

Es ist Aufgabe der Erfindung, eine Sensorenanordnung zur Überwachung des Sorptionsmittels in einem Sorptionsfilter bereitzustellen, mittels der der Beladungszustand bzw. das Fortschreiten der Beladung des Sorptionsmittels in einem Sorptionsfilter ermittelt werden kann, um eine effiziente Filterausnutzung bei Vermeidung von Filterdurchbrüchen zu ermöglichen.

Diese Aufgabe wird durch eine Sensorenanordnung zur Überwachung des Beladungszustandes eines unidirektional durchströmten Sorptionsmittels mit den Merkmalen nach Anspruch 1 sowie einen Sorptionsfilter mit integrierter Sensorenanordnung nach Anspruch 10 gelöst. Ein Verfahren zur Überwachung des Beladungszustandes eines unidirektional durchströmten Sorptionsmittels geht aus Anspruch 9 hervor. Zweckmäßige Weiterbildungen der Erfindung sind in den Ansprüchen 2 bis 8 aufgeführt.

Das Sorptionsmittel, dessen Beladungszustand während der Sorptionsfilterung eines zu filternden Rohgases mittels der erfindungsgemäßen Sensorenanordnung überwacht wird, ist als ein unidirektional durchströmter Sorptionsmittelformkörper ausgebildet. Der Sorptionsmittelformkörper kann zum Beispiel ein Sinterkörper oder eine Schüttung aus dem Sorptionsmittel sein, der oder die in einem Sorptionsfilter, zum Beispiel in der Filterkartusche eines Kartuschenfilters, eingebracht oder verbaut ist. Der erfindungsgemäße, das Sorptionsmittel enthaltende Sorptionsfilter umfasst die Sensorenanordnung als integrierten Bestandteil.

Der zu überwachende Sorptionsmittelformkörper weist eine Einströmoberfläche zur Einleitung des zu filternden Rohgases sowie eine der Einströmoberfläche in Strömungsrichtung beabstandet gegenüberliegende Ausströmoberfläche zur Ableitung eines nach der Sorptionsfilterung aus dem Rohgas gebildeten Reingases auf. Der in Strömungsrichtung kleinste Abstand in dem zwischen der Einströmoberfläche und der Ausströmoberfläche durchströmten Sorptionsmittel wird als Durchströmtiefe des Sorptionsmittelformkörpers bezeichnet bzw. definiert.

Während der Sorptionsfilterung bildet sich infolge der Durchströmung des Sorptionsmittelformkörpers und der Beladung des Sorptionsmittels eine Adsorptionszone quer zur Strömungsrichtung zwischen beladenem Sorptionsmittel und unbeladenem Sorptionsmittel aus. Diese Adsorptionszone bewegt sich im Sorptionsmittelformkörper im Zuge der Beladung von der Einströmoberfläche zur Ausströmoberfläche des Sorptionsmittelformkörpers. Abgegrenzt wird die Adsorptionszone vom jeweils noch unbeladenen Sorptionsmittel durch eine Absorptionsfront. Der in Strömungsrichtung größte Abstand zwischen der Einströmoberfläche und der Adsorptionsfront wird als momentane Beladungstiefe des Sorptionsmittelformkörpers bezeichnet bzw. definiert.

Nach Maßgabe der Erfindung ist die Sensorenanordnung eingerichtet, den Beladungszustand des gesamten Sorptionsmittels im Sorptionsmittelformkörper durch direkte oder indirekte Lokalisierung der Adsorptionszone im Sorptionsmittelformkörper zu bestimmen. Bei Detektion oder Prognose einer vorgegebenen, maximal zulässigen Beladungstiefe gibt die Sensorenanordnung ein Warnsignal aus.

Die Sensorenanordnung umfasst erfindungsgemäß mindestens zwei zur zeitaufgelösten Messwerterfassung eingerichtete Einzelsensoren. In Relation zum Sorptionsmittelformkörper ist jeweils mindestens einer dieser beiden Einzelsensoren einströmseitig positioniert; der andere dieser beiden Einzelsensoren ist in Relation zum Sorptionsmittelformkörper abströmseitig angeordnet. Jeder der Einzelsensoren der Sensorenanordnung ist zumindest als Temperaturfühler zur zeitaufgelösten Erfassung von Temperaturmesswerten ausgebildet. Ein solcher Temperaturfühler kann zum Beispiel ein Thermoelement sein.

Die Sensorenanordnung umfasst eine Auswerteeinheit, die mit den Einzelsensoren - direkt oder indirekt - signaltechnisch zur Verarbeitung und Auswertung der zeitaufgelöst erfassten Messwerte verbunden ist.

Die Auswerteeinheit ist eingerichtet, das Warnsignal auszugeben, wenn die aus den zeitaufgelöst erfassten Messwerten in der Auswerteeinheit verarbeiteten Werte einen vorgegebenen Grenzwert über- oder unterschreiten. Der vorgegebene Grenzwert ist in einer Datenbank der Auswerteeinheit für eine vorgegebene, maximal zulässige Beladungstiefe des Sorptionsmittels hinterlegt.

Die Grundlage der Verarbeitung und Auswertung der Temperaturmesswerte bildet die mit der Sorption verbundene Wärmefreisetzung im Sorptionsmittel. Hierdurch kommt es zu einem Temperaturanstieg im strömenden Fluid. Der Temperaturanstieg ist - infolge der Fluidströmung - auch vor, d. h. stromabwärts, der Adsorptionsfront detektierbar, sodass es möglich ist, das Herannahen der Adsorptionsfront an die Ausströmfläche mittels des im Reingas platzierten Einzelsensors zu erfassen, bevor es zum Filterdurchbruch kommt. Der rohgasseitig angeordnete Einzelsensor fungiert in diesem Zusammenhang unter anderem als Referenztemperatursensor.

Die Auswertung der Temperaturdifferenzen zwischen der an den Einzelsensoren gemessenen Temperaturen sowie die Auswertung des Gradienten der zeitlichen Temperaturverläufe liefert Rückschlüsse auf die Position der Adsorptionszone, d. h. die momentane Beladungstiefe. Bei gleichbleibender Temperatur an einem Einzelsensor kann zum Beispiel davon ausgegangen werden, dass dort keine aktive Adsorption mehr stattfindet. Die aus den zeitaufgelöst erfassten Messwerten verarbeiteten Werte sind also beispielsweise Differenzwerte der Temperaturmesswerte mindestens zweier der als Temperaturfühler ausgebildeten Einzelsensoren und/oder die Gradienten des zeitlichen Verlaufs der Temperaturmesswerte mindestens zweier der als Temperaturfühler ausgebildeten Einzelsensoren.

Die erfindungsgemäße Sensorenanordnung bzw. der Sorptionsfilter zeichnen sich dadurch aus, dass bei deren Anwendung der Beladungszustand des zu überwachenden Sorptionsmittels bei beliebigen Betriebsbedingungen bestimmbar ist. So kann ein betriebskritischer Beladungszustand auch bei instationären Verhältnissen, zum Beispiel bei ungleichmäßig verlaufender Rohgasbeaufschlagung oder schwankender Schadstoffbelastung im Rohgas, erkannt werden. Die Aufnahmekapazität des Sorptionsmittels im Sorptionsfilter ist - bei Vermeidung von Filterdurchbrüchen - in nahezu vollständigem Umfang nutzbar.

Vermieden wird dagegen die - schwierig zu bestimmende - quantitative Ermittlung der Gesamtbeladung des Sorptionsmittels, wodurch letztlich Aufwand und Kosten der Filterüberwachung reduziert werden.

Ein weiterer Vorteil der vorliegenden Sensorenanordnung besteht - infolge der "Fernwirkung" der Wärmefreisetzung - darin, den mit der Adsorption verbundenen Temperaturanstieg vor der Adsorptionsfront detektieren zu können, sodass Einzelsensoren nicht zwingend innerhalb des Sorptionsmittels, sondern auch außerhalb, zum Beispiel an einer vorgegebenen Einbauposition in einer Filterkartusche, platziert werden können. Die Sensorenanordnung kann insofern auch bei sehr kompakten Sorptionsfiltern ohne Integrationsmöglichkeit bzw. bei sehr geringer Durchströmtiefe angewandt werden - und durch Ausgabe des Warnsignals den Filterdurchbruch vor dessen Eintreten ankündigen.

Gemäß einer Ausgestaltung der Sensorenanordnung umfasst diese mehr als zwei - vorzugsweise drei, vier oder fünf - der mindestens als Temperaturfühler ausgebildete Einzelsensoren, die bezüglich des Sorptionsmittelformkörpers entlang der Strömungsrichtung in jeweils unterschiedlichen, zueinander beabstandeten Ebenen quer zur Strömungsrichtung angeordnet sind, wobei höchstens zwei der Einzelsensoren kontaktfrei zum Sorptionsmittelformkörper angeordnet sind. Beispielsweise ist einer der Einzelsensoren einströmseitig im Rohgas, einer der Einzelsensoren abströmseitig im Reingas und die weiteren Einzelsensoren im oder am Sorptionsmittelformkörper positioniert. Durch die erhöhte Anzahl der Einzelsensoren ist eine präzise bzw. präzisere Vorhersage in Bezug auf das Fortschreiten der Adsorptionszone innerhalb des Sorptionsmittelformkörpers - und somit des Beladungszustandes - ermöglicht.

Vorzugsweise liegt die Position der Einzelsensoren, die am Sorptionsmittelformkörper oder innerhalb des Sorptionsmittelformkörpers angeordnet sind, im Bereich von 8 % ± 3 %, 50 % ± 3 % und/oder 92 % ± 3 % der Durchströmtiefe des Sorptionsmittelformkörpers.

Gemäß einer weiteren Ausgestaltung der Sensorenanordnung sind die mindestens zwei zur zeitaufgelösten Messwerterfassung eingerichteten Einzelsensoren ferner zusätzlich als Feuchtfühler zur zeitaufgelösten Erfassung von Feuchtigkeitswerten, zum Beispiel Luftfeuchtigkeitswerten, ausgebildet. D. h., die Einzelsensoren sind sowohl als Temperaturfühler als auch als Feuchtefühler ausgebildet bzw. beinhalten die entsprechenden Fühlerelemente. Vorzugsweise sind Einzelsensoren zur Messung von Temperatur und Feuchte Sensoren auf Basis gedruckter Elektronik. Insbesondere sind die Einzelsensoren miniaturisiert ausgeführt.

Bevorzugt weist diese Ausgestaltung der Sensorenanordnung genau zwei der Einzelsensoren auf, wobei der eine im Rohgas, d. h. in der Zuströmung zum Sorptionsmittelformkörper, und der andere im Reingas, d. h. in der Abströmung vom Sorptionsmittelformkörper, positioniert sind. Weitere der insbesondere miniaturisiert, als gedruckte Elektronik ausgeführten Einzelsensoren können innerhalb des Sorptionsmittelformkörpers eingebracht sein, wenn es zum Beispiel eine Reserve vor dem Filterdurchbruch vorzuhalten gilt.

Die Sensoren auf Basis gedruckter Elektronik können ferner jeweils auf einem luftdurchlässigen Vlies angeordnet sein. Dadurch ist - bei Platzierung der Sensoren im Roh- oder Reingas - ein allseitiger Zutritt von Fluid

In der Sensorenanordnung mit den als kombinierte Temperatur- und Feuchtefühler ausgeführten Einzelsensoren kann die Datenbank der Auswerteeinheit eine Vielzahl empirisch ermittelter Referenzmessdaten als Basis der Verarbeitung und Auswertung der zeitaufgelöst erfassten Temperatur- und Feuchtemesswerte hinterlegt sein. Diese Datenbasis aus Referenzmessdaten kann zum Beispiel aus systematischen Messungen am Sorptionsmittel mit Variation von Feuchte, Temperatur, Schadgaskonzentrationen sowie instationären Verläufen generiert sein.

Mittels der vorstehend beschriebenen Sensorenanordnung, die die Einzelsensoren zur Messung von Temperatur und Feuchte aufweist, ist es möglich, den Beladungszustand des Sorptionsmittels zu bestimmen, ohne die Adsorptionszone direkt zu lokalisieren. Gemäß dem hierzu genutzten Verfahren zur Überwachung des Beladungszustandes des Sorptionsmittel wird eine mittels künstlicher Intelligenz (kurz: KI) unterstützte Bilanzierung der mit dem einströmseitig angeordneten Einzelsensors zeitaufgelöst erfassten Temperatur- und Feuchtemesswerte und der mit dem abströmseitig angeordneten Einzelsensors zeitaufgelöst erfassten Temperatur- und Feuchtemesswerte über die Nutzungsdauer durchgeführt. Auf Basis dieser KI-unterstützten Bilanzierung wird der Beladungszustand des Sorptionsmittels ermittelt. Die mittels der Referenzmessdaten trainierte künstliche Intelligenz erkennt kritische Betriebszustände und -verläufe in den zeitaufgelöst gemessenen Temperatur- und Feuchtemesswerten bzw. den daraus verarbeiteten Werten. Beispielsweise kann im Falle der Desorption von Wasser vom vollständigen Verbrauch des Sorptionsmittels ausgegangen werden.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen
- Fig. 1:: einen Sorptionsfilter nach dem Stand der Technik in Längsschnittdarstellung,
- Fig. 2:: eine in einem Sorptionsfilter integrierte Sensorenanordnung mit fünf Temperaturfühlern in Längsschnittdarstellung,
- Fig. 3: den zeitlichen Verlauf der Temperatur bei Beladung des Sorptionsfilters in Diagrammdarstellung, und
- Fig. 4:: eine in einem Sorptionsfilter integrierte Sensorenanordnung mit zwei kombinierten Temperatur- und Feuchtefühlern in Längsschnittdarstellung.

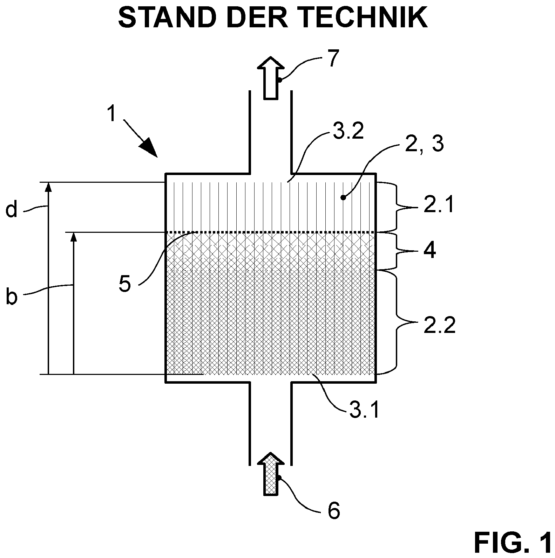

Die Fig. 1 zeigt einen Sorptionsfilter 1 nach dem Stand der Technik, der als eine unidirektional durchströmte Filterkartusche ausgeführt ist. Das Innere der Kartusche ist mit dem Sorptionsmittel 2 gefüllt, wobei das Sorptionsmittel 2 im Inneren der Kartusche - bedingt durch die Wandungen der Kartusche - einen mantelseitig umschlossen Sorptionsmittelformkörper 3 ausbildet. Das Rohgas 6 wird über den - in Fig. 1 unten angeordneten - Filtereingang eingeleitet; das Reingas 7 tritt über den - in Fig. 1 oben angeordneten - Filterausgang aus. Der Sorptionsmittelformkörper 3 besitzt filtereingangs- bzw. einströmseitig die Einströmoberfläche 3.1, die mit dem Rohgas 6 beaufschlagt wird. Filterausgangs- bzw. abströmseitig befindet sich die Ausströmfläche 3.2 des Sorptionsmittelformkörpers 3, an der das im Sorptionsmittel 2 gefilterte Rohgas 6 als Reingas 7 den Sorptionsmittelformkörper 3 verlässt. Als Durchströmtiefe d ist der kleinste Abstand von der Einströmoberfläche 3.1 hin zur Ausströmfläche 3.2 definiert; die Durchströmtiefe d ist in Fig. 1 identisch mit der Längsausdehnung des zylindrischen Sorptionsmittelformkörpers 3.

Während der Beaufschlagung mit dem Rohgas 6 wird das Sorptionsmittel 2 beladen, d. h., das vor Beginn der Rohgasbeaufschlagung vollständig unbeladene Sorptionsmittel 2.1 nimmt sukzessive ein im Rohgas 6 enthaltenes Sorptiv, zum Beispiel einen zu filternden Schadstoff, durch Adsorption auf, wodurch sich - zunächst im Bereich der Einströmoberfläche 3.1 - die Adsorptionszone 4 ausbildet. Die Adsorptionszone 4 wandert bei fortschreitender Beladung des Sorptionsfilters 1 in Strömungsrichtung durch das Sorptionsmittel 2 bzw. durch den Sorptionsmittelformkörper 3 hindurch, wobei hinter bzw. stromaufwärts der Adsorptionszone 4 ein Bereich mit (vollständig) beladenem Sorptionsmittel 2.2 verbleibt. Zum (noch) unbeladenen Sorptionsmittel 2.1 hin ist die Adsorptionszone 4 durch die Adsorptionsfront 5 abgegrenzt.

Die zu einem bestimmten Zeitpunkt während der Beladung des Sorptionsfilters 1 vorliegende, d. h. momentane, Position der Adsorptionsfront 5 im Sorptionsmittelformkörper 3 ist durch die (momentane) Beladungstiefe b charakterisiert, die als größter Abstand von der Einströmoberfläche 3.1 hin zur Adsorptionsfront 5 definiert ist.

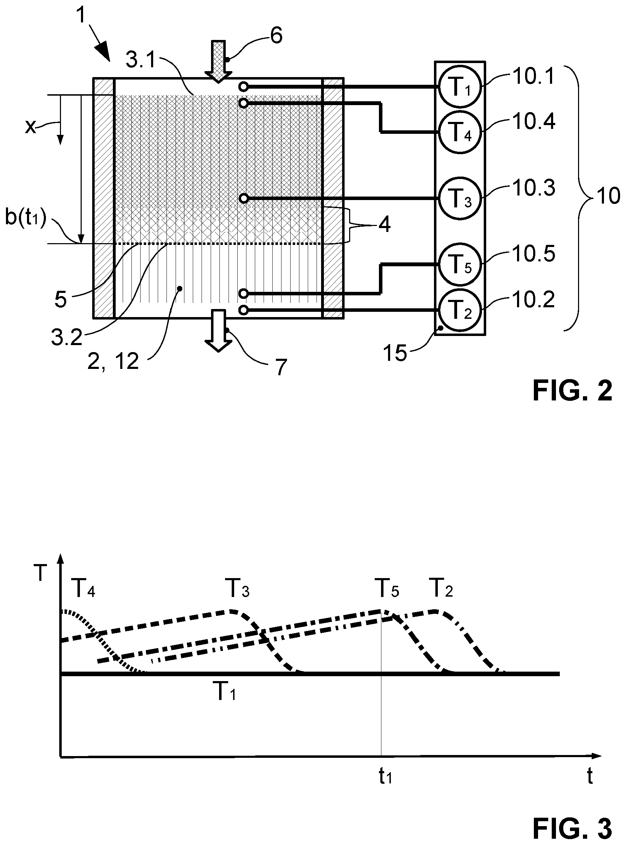

Der grundsätzliche Aufbau und die Wirkungsweise des Sorptionsfilters 1 nach Fig. 2 entsprechen denen nach Fig. 1. Zusätzlich integriert in den Sorptionsfilters 1 ist die Sensorenanordnung 10, die fünf in einer Reihe entlang der Strömungsrichtung angeordnete Einzelsensoren 10.1, 10.2, 10.3, 10.4, 10.5 umfasst. Der filtereingangsseitige Einzelsensor 10.1 befindet sich kontaktfrei oberhalb der Einströmoberfläche 3.1 des Sorptionsmittelformkörpers 3 im Rohgas 6; der filterausgangsseitige Einzelsensor 10.2 ist - ebenfalls kontaktfrei - unterhalb der Ausströmoberfläche 3.2 des Sorptionsmittelformkörpers 3 im Reingas 7 positioniert. Die drei weiteren Einzelsensoren 10.3, 10.4, 10.5 sind innerhalb des Sorptionsmittelformkörpers 3 kontaktierend zum Sorptionsmittel 2 angeordnet. Die Einzelsensoren 10.1, 10.2, 10.3, 10.4, 10.5 sind als Temperaturfühler in Form von Thermoelementen ausgebildet. Zur Verarbeitung und Auswertung der mit den Einzelsensoren 10.1, 10.2, 10.3, 10.4, 10.5 gemessenen Temperaturen T₁, T₂, T₃, T₄, T₅. dient die Auswerteeinheit 15.

Fig. 3 veranschaulicht im Temperatur T-Zeit t-Diagramm die zeitlichen Verläufe der an den Einzelsensoren 10.1, 10.2, 10.3, 10.4, 10.5jeweils gemessenen Temperaturen T₁, T₂, T₃, T₄, T₅. Zum beispielhaft herausgestellten Zeitpunkt t₁ erreicht die Temperaturkurve Ts des Einzelsensors 10.5 ein Maximum. Als zeitaufgelöst verarbeitete und ausgewertete Werte der gemessenen Temperaturen T₁, T₂, T₃, T₄, Ts kann zum Beispiel die Differenz der am Einzelsensor 10.1 gemessenen Temperatur T₁ und der am Einzelsensor 10.5 gemessenen Temperatur Ts benutzt werden. Gleiches gilt für die Gradienten der Temperaturverläufe oder Temperaturdifferenzverläufe.

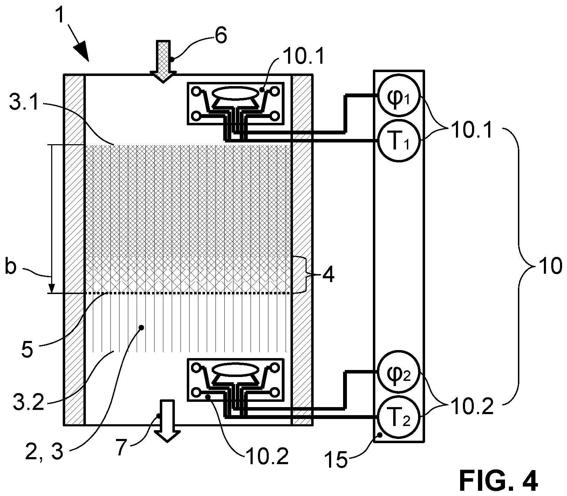

Die Ausführung der in den Sorptionsfilter 1 integrierten Sensorenanordnung 10 gemäß Fig. 4 umfasst zwei Einzelsensoren 10.1, 10.2, die als miniaturisierte Temperatur- und Feuchtefühler in gedruckter Elektronik ausgeführt sind.

Mittels der Sensorenanordnung 10 nach Fig. 4 werden mit dem filtereingangsseitig im Rohgas 6 positionierten Einzelsensor 10.1 zeitaufgelöst die Temperatur T₁ und die Feuchte ϕ₁ des Rohgases 6 gemessen und an die Auswerteeinheit 15 weitergegeben. Gleichzeitig werden mit dem filterausgangsseitig im Reingas 7 angeordneten Einzelsensor 10.2 zeitaufgelöst die Temperatur T₂ und die Feuchte ϕ₂ des Reingases 7 gemessen und an die Auswerteeinheit 15 übermittelt. Die zeitaufgelöst erfassten roh- und reingasseitigen Temperatur- und Feuchtewerte werden mit empirisch ermittelten Datensätzen, die in der Datenbank der Auswerteeinheit 15 hinterlegt sind, abgeglichen. Auf dieser Grundlage wird - zum Beispiel mit Hilfe einer mittels der empirischen Daten trainierten künstlichen Intelligenz - der Beladungszustand des Sorptionsmittels 2 des Sorptionsfilters 1 bestimmt - und damit eine indirekte Prognose der Adsorptionszonenposition innerhalb des Sorptionsmittelformkörpers 3 bzw. letztlich des bevorstehenden Filterdurchbruchs ermöglicht.

### Bezugszeichenliste

- 1: Sorptionsfilter
- 2: Sorptionsmittel
- 2.1: unbeladenes Sorptionsmittel (Sorbent)
- 2.2: beladenes Sorptionsmittel (Sorbat)
- 3: Sorptionsmittelformkörper
- 3.1: Einströmoberfläche
- 3.2: Ausströmoberfläche
- 4: Adsorptionszone
- 5: Adsorptionsfront
- 6: Rohgas
- 7: Reingas
- 10: Sensorenanordnung
- 15: Auswerteeinheit
- b: Beladungstiefe
- bₘₐₓ: maximal zulässige Beladungstiefe
- d: Durchströmtiefe
- T: Temperatur
- t: Zeit
- ϕ: Feuchte

## Patentansprüche

1. Sensorenanordnung (10) zur Überwachung des Beladungszustandes eines Sorptionsmittels (2), das zur Sorptionsfilterung eines Rohgases (6) als unidirektional durchströmter Sorptionsmittelformkörper (3) ausgebildet ist, wobei
- der Sorptionsmittelformkörper (3) eine Einströmoberfläche (3.1) zur Einleitung des zu filternden Rohgases (6) und eine der Einströmoberfläche (3.1) in Strömungsrichtung beabstandet gegenüberliegende Ausströmoberfläche (3.2) zur Ableitung eines nach der Sorptionsfilterung aus dem Rohgas (6) gebildeten Reingases (7) aufweist, wobei der in Strömungsrichtung kleinste Abstand in dem zwischen der Einströmoberfläche (3.1) und der Ausströmoberfläche (3.2) durchströmten Sorptionsmittel (2) eine Durchströmtiefe (d) des Sorptionsmittelformkörpers (3) definiert, und
- im Sorptionsmittelformkörper (3) während der Durchströmung und Beladung eine quer zur Strömungsrichtung zwischen beladenem Sorptionsmittel (2.2) und unbeladenem Sorptionsmittel (2.1) ausgebildete Adsorptionszone (4) durch eine Absorptionsfront (5) vom unbeladenen Sorptionsmittel (2.1) abgegrenzt ist, wobei der in Strömungsrichtung größte Abstand zwischen der Einströmoberfläche (3.1) und der Adsorptionsfront (5) eine momentane Beladungstiefe (b) des Sorptionsmittelformkörpers (3) definiert,
**dadurch gekennzeichnet, dass**
- die Sensorenanordnung (10) mindestens zwei zur zeitaufgelösten Messwerterfassung eingerichtete Einzelsensoren (10.1, 10.2) umfasst, wobei in Relation zum Sorptionsmittelformkörper (3) jeweils mindestens einer (10.1) der beiden Einzelsensoren (10.1, 10.2) einströmseitig in der Zuströmung zum Sorptionsmittelformkörper (3), kontaktfrei zum Sorptionsmittelformkörper (3) und jeweils mindestens einer (10.2) der beiden Einzelsensoren (10.1, 10.2) abströmseitig in der Abströmung vom Sorptionsmittelformkörper (3), kontaktfrei zum Sorptionsmittelformkörper (3) positioniert sind,
- jeder der zur zeitaufgelösten Messwerterfassung eingerichteten Einzelsensoren (10.1, 10.2) als Temperaturfühler zur zeitaufgelösten Erfassung von Temperaturmesswerten und ferner zusätzlich als Feuchtfühler zur zeitaufgelösten Erfassung von Feuchtemesswerten ausgebildet ist,
- das die Einzelsensoren (10.1, 10.2) zur Messung von Temperatur und Feuchte Sensoren auf Basis gedruckter Elektronik sind, wobei die Sensoren auf Basis gedruckter Elektronik jeweils auf einem luftdurchlässigen Vlies angeordnet sind,
- die Sensorenanordnung (10) ferner eine Auswerteeinheit (15) umfasst, die mit den Einzelsensoren (10.1, 10.2) signaltechnisch zur Verarbeitung und Auswertung der zeitaufgelöst erfassten Messwerte verbunden ist,
- die Auswerteeinheit (15) eingerichtet ist, ein Warnsignal auszugeben, wenn die aus den zeitaufgelöst erfassten Messwerten in der Auswerteeinheit (15) verarbeiteten Werte einen vorgegebenen Grenzwert über- oder unterschreiten, wobei der vorgegebenen Grenzwert in einer Datenbank der Auswerteeinheit (15) für eine vorgegebene, maximal zulässige Beladungstiefe (bₘₐₓ) des Sorptionsmittels (2) hinterlegt ist.

2. Sensorenanordnung (10) nach Anspruch 1, **dadurch gekennzeichnet, dass** in der Datenbank der Auswerteeinheit (15) ferner eine Vielzahl empirisch ermittelter Referenzmessdaten als Basis der Verarbeitung und Auswertung der zeitaufgelöst erfassten Temperatur- und Feuchtemesswerte hinterlegt sind.

3. Sensorenanordnung (10) nach Anspruch 1 oder 2, **dadurch gekennzeichnet, dass** diese eine künstliche Intelligenz zur Unterstützung einer Bilanzierung der mit dem einströmseitig angeordneten Einzelsensor (10.1) zeitaufgelöst erfassten Temperatur- und Feuchtemesswerte und der mit dem abströmseitig angeordneten Einzelsensor (10.2) zeitaufgelöst erfassten Temperatur- und Feuchtemesswerte umfasst.

4. Sensorenanordnung (10) nach einem der Ansprüche 1 bis 3, **dadurch gekennzeichnet, dass** diese genau zwei der Einzelsensoren aufweist, wobei in Relation zum Sorptionsmittelformkörper (3) der eine (10.1) der beiden Einzelsensoren (10.1, 10.2) einströmseitig in der Zuströmung zum Sorptionsmittelformkörper (3), kontaktfrei zum Sorptionsmittelformkörper (3) und der andere (10.2) der beiden Einzelsensoren (10.1, 10.2) abströmseitig in der Abströmung vom Sorptionsmittelformkörper (3), kontaktfrei zum Sorptionsmittelformkörper (3) positioniert sind

5. Sensorenanordnung (10) nach einem der Ansprüche 1 bis 3, **dadurch gekennzeichnet, dass** diese drei, vier oder fünf der mindestens als Temperaturfühler ausgebildeten Einzelsensoren (10.1, 10.2, 10.3, 10.4, 10.5) umfasst, die bezüglich des Sorptionsmittelformkörpers (3) entlang der Strömungsrichtung in jeweils unterschiedlichen, zueinander beabstandeten Ebenen quer zur Strömungsrichtung angeordnet sind, wobei höchstens zwei der Einzelsensoren (10.1, 10.2) kontaktfrei zum Sorptionsmittelformkörper (3) angeordnet sind.

6. Sensorenanordnung (10) nach Anspruch 5, **dadurch gekennzeichnet, dass** die Position der Einzelsensoren (10.3, 10.4, 10.5), die am Sorptionsmittelformkörper (3) oder innerhalb des Sorptionsmittelformkörpers (3) angeordnet sind, im Bereich von 8 % ± 3 %, 50 % ± 3 % und/oder 92 % ± 3 % der Durchströmtiefe (d) des Sorptionsmittelformkörpers (3) liegt.

7. Sensorenanordnung (10) nach Anspruch 5 oder 6, **dadurch gekennzeichnet, dass** die aus den zeitaufgelöst erfassten Messwerten verarbeiteten Werte Differenzwerte der Temperaturmesswerte mindestens zweier der als Temperaturfühler ausgebildeten Einzelsensoren (10.1, 10.2, 10.3, 10.4, 10.5) sind.

8. Sensorenanordnung (10) nach einem der Ansprüche 5 bis 7, **dadurch gekennzeichnet, dass** die aus den zeitaufgelöst erfassten Messwerten verarbeiteten Werte die Gradienten des zeitlichen Verlaufs der Temperaturmesswerte mindestens zweier der als Temperaturfühler ausgebildeten Einzelsensoren (10.1, 10.2, 10.3, 10.4, 10.5) sind.

9. Verfahren zur Überwachung des Beladungszustandes eines Sorptionsmittel (2), **dadurch gekennzeichnet, dass** dieses mittels einer Sensorenanordnung (10) nach Anspruch 3 durchgeführt wird, wobei der Beladungszustand durch eine mittels künstlicher Intelligenz unterstützten Bilanzierung der mit dem einströmseitig angeordneten Einzelsensor (10.1) zeitaufgelöst erfassten Temperatur- und Feuchtemesswerte und der mit dem abströmseitig angeordneten Einzelsensor (10.2) zeitaufgelöst erfassten Temperatur- und Feuchtemesswerte ermittelt wird.

10. Sensorfilter (1), **dadurch gekennzeichnet, dass** in diesem eine Sensorenanordnung (10) nach einem der Ansprüche 1 bis 8 zur Überwachung des Beladungszustandes des im Sensorfilter (1) enthaltenen Sorptionsmittels (2) integriert ist.
